Europäisches Patentamt

European Patent Office

Office européen des brevets

(19)

(11) Veröffentlichungsnummer: **0 064 600**

**A1**

## (12) EUROPÄISCHE PATENTANMELDUNG

(21) Anmeldenummer: **82102876.8**

(22) Anmeldetag: **03.04.82**

(51) Int. Cl.³: **F 16 K 1/38**
**F 16 K 47/04, F 16 K 1/54**

(30) Priorität: **02.05.81 DE 3117403**

(43) Veröffentlichungstag der Anmeldung:
**17.11.82 Patentblatt 82/46**

(84) Benannte Vertragsstaaten:
**AT BE FR GB IT NL SE**

(71) Anmelder: **MESSER GRIESHEIM GMBH**
**Patentabteilung Hanauer Landstrasse 330**
**D-6000 Frankfurt/Main 1(DE)**

(72) Erfinder: **Buchmüller, Jürgen**
**Horstdyk 47**
**D-4150 Krefeld(DE)**

(72) Erfinder: **Nobis, Peter**
**Donaustrasse 40**
**D-4040 Neuss 21(DE)**

(54) Feinregulierventil mit Absperrfunktion.

(57) Um die Vorteile von Absperr- und Regelventilen, nämlich schnelle Absperrung und feine Regelung, zu vereinigen, wird der Spindelkopf (5), ausgehend von der Dichtungskante (14), als Zylinder (15) ausgebildet, dessen Ende die Form einer Halbkugel (18) besitzt. Der Ventilsitz (2) ist eine zylindrische Bohrung, die mit dem Zylinder des Spindelkopfes in Eingriff gebracht werden kann. Vorzugsweise wird der Übergangsbereich zwischen Zylinder und Halbkugel konisch ausgebildet, beispielsweise als Doppelkonus von 1° und 3°. Dieser Übergangsbereich wirkt wie ein Nadelventil mit äußerst feiner Regelmäßigkeit. Beim weiteren Drehen der Spindel wird durch die Halbkugel der Strömungsquerschnitt zunehmend rascher freigegeben, so daß sich das Ventil dann wie ein Absperrventil verhält.

Fig. 2

EP 0 064 600 A1

– 1 –

MESSER GRIESHEIM GMBH                    MG 1268

Kennwort:  Regulier-Absperrventil       EM 971

Erfinder:  J.Buchmüller                  Ordner: A
           P.Nobis

Feinregulierventil mit Absperrfunktion

Die Erfindung betrifft ein Feinregulierventil mit Absperrfunktion, welches im wesentlichen aus dem Ventilkörper mit
dem Ventilsitz und der Ventilspindel mit der Spindelführung und dem Spindelkopf besteht.

Absperrventile werden so konstruiert, daß mit wenigen Umdrehungen der Ventilspindel das Ventil geöffnet und wieder
geschlossen werden kann. Wenn der Spindelkopf als Kegel
ausgebildet ist, wird der Kegel ziemlich stumpf gehalten.
Eine Möglichkeit zur Feinregulierung bieten solche Absperrventile nicht. Feinregulierventile werden dagegen
so ausgelegt, daß sie erst nach zahlreichen Umdrehungen
der Ventilspindel den vollen Strömungsquerschnitt freigeben.
Der Ventilkegel wird daher sehr spitz gehalten, vielfach
hat er die Form einer Nadel.

- 2 -

Wegen der zahlreichen erforderlichen Umdrehungen der Ventilspindel bis zum vollen Öffnen bzw. Schließen des Ventils sind Feinregulierventile als Absperrventile ungeeignet.

Der Erfindung liegt daher die Aufgabe zugrunde, ein Feinregulierventil zu schaffen, welches nur eine verhältnismäßig geringe Anzahl von Umdrehungen der Ventilspindel benötigt, um das Ventil vollständig zu öffnen oder zu schließen, mit dem sich aber andererseits eine Feinregulierung des strömenden Mediums ermöglichen läßt.

Bei einem Feinregulierventil mit Absperrfunktion, im wesentlichen bestehend aus Ventilkörper mit Ventilsitz und Ventilspindel mit Spindelführung und Spindelkopf, wird dies gemäß der Erfindung erreicht, indem der Spindelkopf, ausgehend von der Dichtungskante, als Zylinder ausgebildet ist, dessen Ende zu einer Halbkugel ballig gearbeitet ist, und in-dem ferner der Ventilsitz als zylindrische Bohrung ausgebildet ist, die mit dem Zylinder des Spindelkopfes in Eingriff gebracht werden kann.

Beim Öffnen des Ventils wird zunächst im Übergangsbereich vom Zylinder zur Halbkugel des Spindelkopfes ein sehr kleiner Strömungsquerschnitt ganz allmählich freigegeben. Das Ventil funktioniert in diesem Bereich als Feinregulierventil. Beim weiteren Herausdrehen der Ventilspindel vergrößert sich der strömende Querschnitt überproportional schnell, bis schließlich der gesamte Querschnitt freigegeben ist. In diesem Bereich sind die Reguliermöglichkeiten schlecht, das Ventil verhält sich hier wie ein übliches Absperrventil. Da aber in den weitaus meisten Fällen eine feine Reguliermöglichkeit nur bei kleinen Strömungsmengen gefordert wird, ist dies in der Regel nicht von Nachteil.

Die Feinreguliermöglichkeit des erfindungsgemäßen Ventils kann noch gesteigert werden, indem der Übergangsbereich zwischen dem Zylinder und der Halbkugel des Spindelkopfes konisch ausgebildet ist, vorzugsweise als Doppelkonus mit Winkeln von 1° und 3°. Hierdurch wird der Bereich mit kleinen Strömungsmengen und feiner Reguliermöglichkeit beträchtlich vergrößert. So-lange Strömungsquerschnitte im konischen Bereich des Spindelkopfes freigegeben werden, funktioniert das erfindungsgemäße Ventil wie ein Nadelventil mit feinster Reguliermöglichkeit. Sobald der konische Bereich verlassen wird, wird der freie Strömungsquerschnitt rasch größer. Es fehlen dann nur noch wenige Spindelumdrehungen bis zum völligen Öffnen des Ventils.

Die Zeichnungen veranschaulichen ein Ausführungsbeispiel der Erfindung, ein Feinregulierventil mit Absperrfunktion für tiefsiedende verflüssigte Gase.

Es zeigen:

Fig.1 einen Schnitt durch das Feinregulierventil,

Fig.2 eine vergrößerte Darstellung des Spindelkopfes des Ventils nach Fig.1,

Fig.3 den Spindelkopf nach Fig.2 mit Ventilsitz,

Fig.4 eine andere Ausführung des Ventilsitzes nach Fig.3.

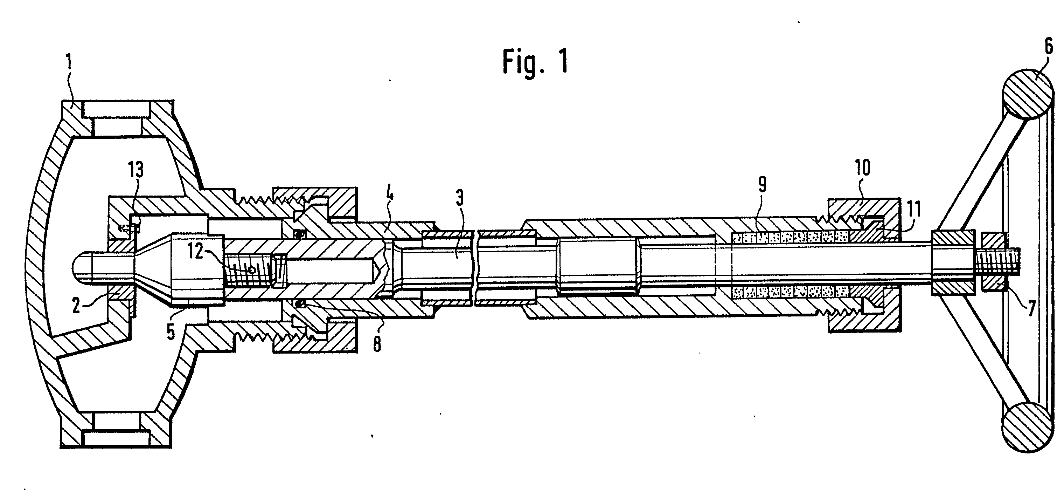

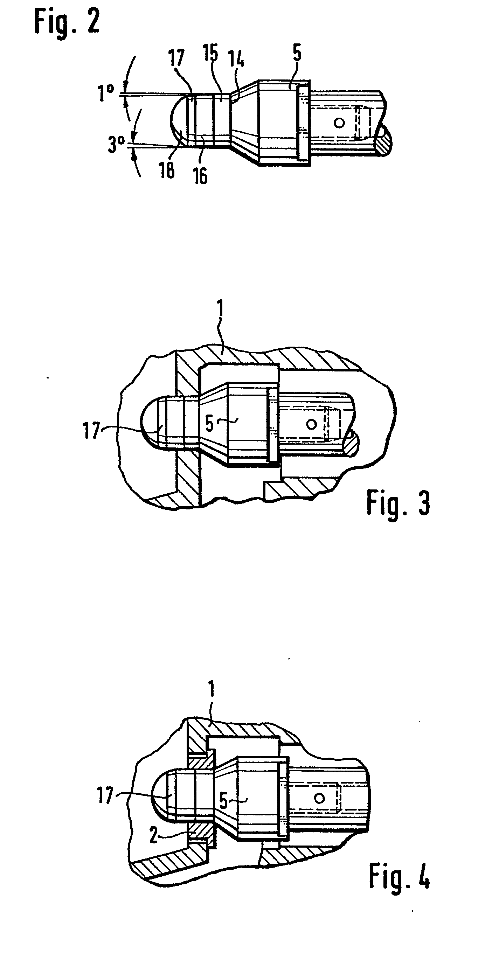

Das in Fig.1 im Schnitt dargestellte Feinregulierventil besteht aus dem Ventilkörper 1, dem Ventilsitz 2, der Ventilspindel 3, der Spindelführung 4,dem Spindelkopf 5, sowie dem Handrad 6, welches mittels der Mutter 7 auf der Ventilspindel 3 befestigt ist. Da mit dem Ventil der Durchfluß tiefsiedender verflüssigter Gase reguliert werden soll, sind die Ventilspindel 3 und die Spindelführung 4 verhältnismäßig lang ausgeführt, um lange wärmeleitende Wege zu haben und Isolationsmaterial anbringen zu können. Die Abdichtung der Ventilspindel 3 gegen die Spindelführung 4 erfolgt durch einen O-Ring 8 und Stopfbuchspackung 9. Die Stopfbuchspackung 9 wird durch die Stopfbuchsmutter 10 und die Brille 11 zusammengedrückt. Der Spindelkopf 5 ist mittels eines Żylinderkerbstiftes 12 mit der Ventilspindel 3 verbunden. Der Ventilsitz 2 ist durch eine Zylinderschraube 13 im Ventilkörper 1 befestigt. Sowohl der Zylinderkopf 5 als auch der Ventilsitz 2 sind somit leicht austauschbar, so daß bei verschiedenen Ventilgrößen nur diese beiden Teile unterschiedlich sind. Es kann jedoch auch die Ventilspindel 3 und der Spindelkopf 5 aus einem Stück hergestellt werden. Desgleichen ist es möglich, den Ventilsitz 2 direkt in den Ventilkörper 1 hineinzuarbeiten, wie es Fig.3 zeigt.

Fig.2 zeigt in vergrößerter Darstellung den erfindungsgemäßen Spindelkopf 5. Ausgehend von der Dichtungskante 14 ist der Spindelkopf 5 zunächst als Zylinder 15 ausgebildet. Daran schließen sich ein Konus 16 mit einem Winkel von 1° und ein Konus 17 mit einem Winekel von 3° an. Den Abschluß bildet eine Halbkugel 18. Die Fig.3 und 4 zeigen den erfindungsgemäßen Spindelkopf im Eingriff mit dem Ventilsitz 2, der bei der Ausführungsform gemäß Fig.3 direkt in den Ventilkörper 1 hineingearbeitet ist. Es ist hieraus unmittelbar ersichtlich, daß beim Öffnen des Ventils zunächst sehr kleine Strömungsquerschnitte ganz allmählich freigegeben werden. Das Ventil verhält sich hier wie ein Nadelventil, bietet also äußerstfeine Regulierungsmöglichkeiten. Sobald der Konus 17 den Ventilsitz 2 passiert hat, nimmt der freiwerdende Strömungsquerschnitt rasch zu, bis das Ventil vollständig geöffnet ist. In diesem Bereich wirkt das Ventil daher wie ein übliches Absperrventil. Die konische Ausbildung des Übergangsbereiches zwischen Zylinder 15 und Halbkugel 18 ist nicht unbedingt erforderlich, vergrößert aber den feinregulierbaren Bereich des Strömungsquerschnittes beträchtlich.

Ba/Hi
Ffm., 30.03.1981

Patentansprüche

1. Feinregulierventil mit Absperrfunktion im wesentlichen
bestehend aus Ventilkörper (1) mit Ventilsitz (2) und
Ventilspindel (3) mit Spindelführung (4) und Spindelkopf (5),
dadurch gekennzeichnet,
daß der Spindelkopf, ausgehend von der Dichtungskante (14),
als Zylinder (15) ausgebildet ist, dessen Ende zu einer
Halbkugel (18) ballig gearbeitet ist, und daß ferner
der Ventilsitz als zylindrische Bohrung ausgebildet
ist, die mit dem Zylinder des Spindelkopfes in Eingriff gebracht werden kann.

2. Feinregulierventil nach Anspruch 1,
dadurch gekennzeichnet,
daß der Übergangsbereich zwischen Zylinder und Halbkugel des Spindelkopfes konisch ausgebildet ist.

3. Feinregulierventil nach Anspruch 2,
dadurch gekennzeichnet,
daß der Übergangsbereich zwischen Zylinder und Halbkugel des Spindelkopfes als Doppelkonus mit Winkeln
von 1° und 3° ausgebildet ist.

Ba/Hi
Ffm., 30.03.1981
EM 971
MG 1268

# Fig. 1

1/2

0064600

Fig. 2

Fig. 3

Fig. 4

# 0064600
Nummer der Anmeldung

## EUROPÄISCHER RECHERCHENBERICHT

Europäisches
Patentamt

EP 82 10 2876

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | DE-A-2 022 579 (WHITEY RESEARCH TOOL CO.) <br> * Seite 4, letzter Absatz; Figur 3 * | 1,2 | F 16 K 1/38 <br> F 16 K 47/04 <br> F 16 K 1/54 |
| | --- | | |
| A | FR-A-1 491 015 (ALKON PRODUCTS CORP.) <br> * Seite 3, rechte Spalte, Zeilen 3-31 * | 1 | |
| | --- | | |
| A | DE-C- 816 983 (DRÄGERWERK) <br> * Anspruch * | 1 | |
| | --- | | |
| A | GB-A- 309 (L.M. FOX) | | |
| | --- | | |
| A | GB-A-1 190 651 (R.E. SELF) | | **RECHERCHIERTE SACHGEBIETE (Int. Cl. 3)** |
| | --- | | |
| A | US-A-3 290 002 (R.E. SELF) | | F 16 K 1/00 <br> F 16 K 47/00 <br> F 16 K 3/00 |
| | ----- | | |

Der vorliegende Recherchenbericht wurde für alle Patentansprüche erstellt.

| Recherchenort <br> DEN HAAG | Abschlußdatum der Recherche <br> 12-08-1982 | Prüfer <br> DE SMET F.P. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82